# EUROPEAN PATENT SPECIFICATION

(11) **EP 1 427 290 B1**
(45) Date of publication and mention of the grant of the patent: **19.03.2008**
(21) Application number: 01968783.9
(22) Date of filing: 12.09.2001
(51) Int. Cl.: A21C 11/16, A21C 11/10

(54) **EXTRUDER DIE ASSEMBLY**
EXTRUSIONSDÜSENAUFBAU
ENSEMBLE FILIERE D'EXTRUSION

(43) Date of publication of application: 16.06.2004
(73) Proprietor: Kerry Inc., Beloit, WI 53511 (US)
(72) Inventor: HUNTER, Thomas, B., Collinsville, IL (US)
(74) Representative: Jennings, Tara Romaine
(86) International application number: PCT/US2001/028373
(87) International publication number: WO 2003/022058

(56) References cited:
- US-A- 3 362 355
- US-A- 3 860 373
- US-A- 3 947 178
- US-A- 3 969 994
- US-A- 4 015 518
- US-A- 5 773 043
- US-B1- 6 206 678

## Description

### BACKGROUND OF THE INVENTION

### 1. Field of the Invention

The present invention relates to an extruder die and cutter assembly for extruding filled food pieces. More particularly, the present invention relates to an extruder die and cutter assembly which includes an extension formed on an extrusion member and a filling tube for allowing the extrudate to exit the die and cutter assembly from the side.

### 2. Description of Related Art

Extruders for producing extruded food pieces are known. Such extruders can conventionally include a pressure vessel for containing, under pressure, a mash of the food to be extruded. Furthermore, pressure exerting means for maintaining pressure in the pressure vessel, a manifold in fluid communication with the pressure vessel, and a die and cutter assembly, generally located underneath the pressure vessel, in fluid communication with the manifold can be included. The extruded food is cut to size by a die and cutter assembly.

Food products that can be extruded in such extruders include, *e.g*., meats, poultry, seafood, cereal grains, vegetables, fruits, and solid dairy products. As specific examples, the mash may be prepared from beef, chicken, shrimp, wheat, corn, rice, potatoes, apples, and cheese.

The food is ground to a particle size consistent with forming a fluid mash, *e.g*., particle sizes that will pass through a U. S. Screen Series No. 5 screen, more usually a No. 10 screen, and often a No. 20 screen up to about a No. 100 screen.

Water or other dispersing liquids, *e.g*., 3% to 70%, may be added to the ground food in order to produce a liquid mash. Binders, flavors, preservatives, colors, stabilizers, antioxidants, and the like may be added to the mash, in conventional amounts. Most often, a gelling material is added to the mash, *e.g*., a settable gum or pectate, for example, guar gum and sodium alginate, in conventional amounts of about 0.1% to 25%. The gum or pectate is set by a gelling agent, e.g., a 0.5% to 10% solution of calcium chloride and sodium alginate.

Industry has not yet, however, made great progress in providing an extruded foodstuff containing a filling. The preamble of claim 1 is derived from US-A-6206678.

### SUMMARY OF THE INVENTION

It is an object of the present invention to provide an extruder die and cutter assembly which makes up for the above deficiencies of the prior art. Specifically, it is an object of the present invention to provide an extruder die and cutter assembly which includes an extruded product having a filling.

It is another object of the present invention to provide an extruder die and cutter assembly which includes extensions formed on the extrusion member and the filling tube to allow for the extrudate to exit the die and cutter assembly from the side.

It is yet another object of the present invention to provide an extrusion die and cutter assembly having a cutting member for cooperating with the extrusion member to cut and crimp the extrudate exiting the die and cutter assembly to form food products of a predetermined length.

In order to accomplish the above objects of the present invention, a die and cutter assembly for an extruder for producing an extruded food piece containing a filling as defined by the features of the characterising clause of claim 1 has been provided.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Figure 1 is a perspective view of the die and cutter assembly of the present invention;
Figure 2 is a front elevation of the die and cutter assembly of the present invention illustrating the "ready to cut" state;
Figure 3 is a cross-section of the die and cutter assembly of the present invention along line 3-3 of Figure 2;
Figure 4 is a front elevation of the die and cutter assembly of the present invention illustrating the "after cut" state; and
Figure 5 is a cross-section of the die and cutter assembly of the present invention along line 5-5 of Figure 4.

### DETAILED DESCRIPTION OF THE INVENTION

The present invention will now be described with reference to the accompanying drawings in which the same reference numerals have been used to identify the same or similar elements.

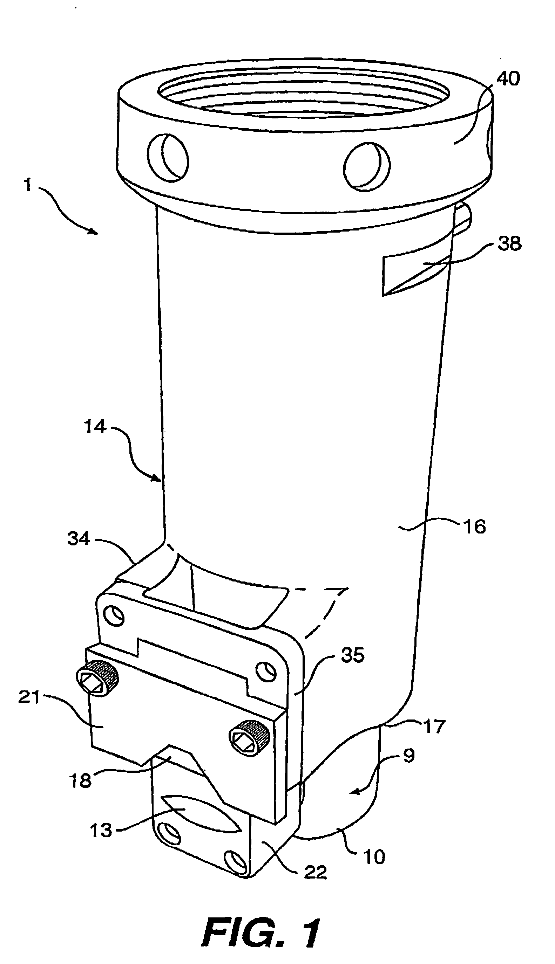

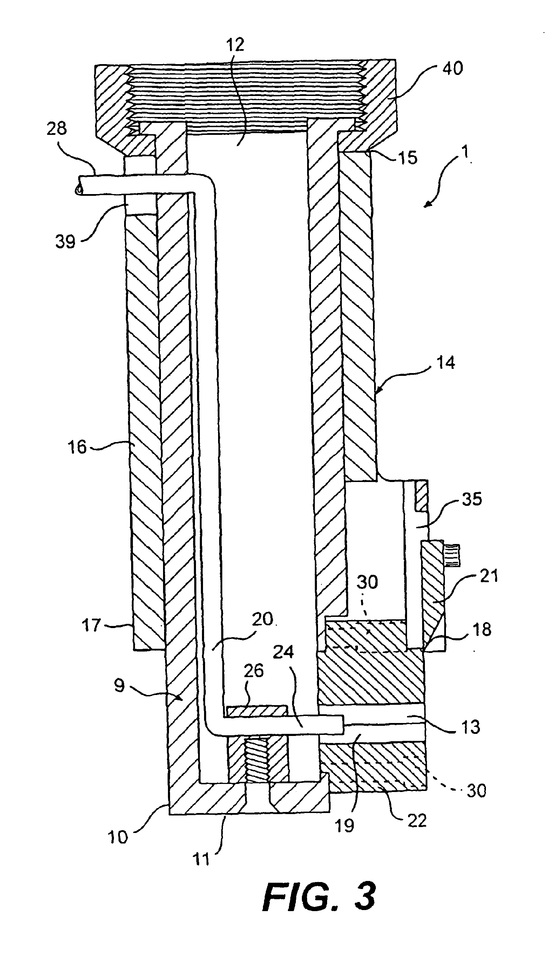

Figures 1-3 illustrate the die and cutter assembly of the present invention in the "ready to cut" state. Referring to Figures 1-3, the die and cutter assembly of the present invention 1 includes an elongated annular extrusion member 9 having an extrusion wall 10 formed at a lower end thereof. A closed extrusion end 11 is formed adjacent the extrusion end 10 and an opened feed end 12 (see Figure 3) is formed adjacent an upper end of the extrusion member 9. The die and cutter assembly of the present invention is attachable to an extruder, such as the extruder described in U.S. Patent No. 5,773,043, and will therefore not be described in detail. The opened feed end 12 is attachable in fluid communication to a manifold (not shown) by, for example, a threaded flange 40. The manifold is connectable to a pressure vessel (not shown) for containing a mash under pressure by a pressure exerting device (not shown).

A filling tube 20 extends into the extrusion member 9. The filling tube is also in fluid communication with a second manifold (not shown), which is connectable to a second pressure vessel (not shown) for containing a filling under pressure by a second pressure exerting device (not shown).

It is noted that the manifolds are included in the embodiment described above for distributing the mash and the filling to a plurality of die and cutter assemblies. However, if only one die and cutter assembly is to be used, the necessity of the manifolds is eliminated.

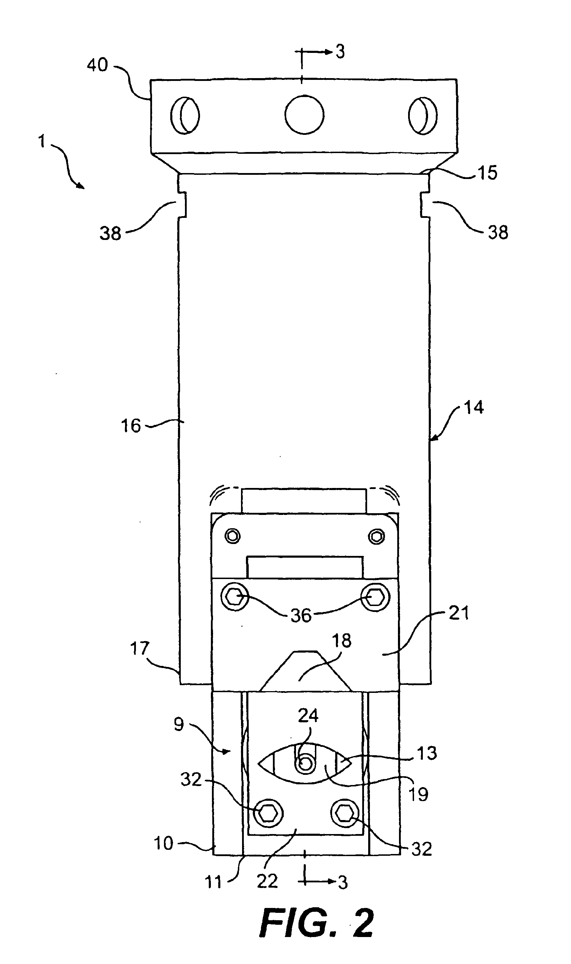

The extrusion member 9 includes an extension 22 formed at substantially a right angle to an axis of the extrusion member 9. The extension 22 is mounted to the extrusion member 9 at a side surface thereof by, for example, a plurality of screws 32 which extend through respective holes 30 formed in the extension 22 (see Figures 2 and 3). The extension 22 also includes an extrusion die 13 on an end thereof for cooperating with a cutting element 21 of a cutter member 14 as will be described hereinbelow.

Furthermore, an extension 24 is formed on the filling tube 20 at substantially a right angle to the axis of the filling tube 20. Referring specifically to Figures 2 and 3, the extension 24 is located generally centrally of the extension 22 of the extrusion member 9. The extension 24 of the filling tube 20 extends within an extrusion passageway 19 formed in the extension 22 of the extrusion member 9. Referring to Figure 3, the extension 24 of the filling tube 20 is mounted to the extrusion member 9 by a support block 26 and includes an upper portion 28 which is bent at substantially a right angle to extend through the extrusion member 9. The upper portion 28 is attachable to a manifold as described above.

The die and cutter assembly 1 of the present invention also includes a cutter member 14 having an opened driveable end 15, an elongated cutter wall 16, and an opened cutter end 17. The cutter wall 16 includes a housing or extension 34 formed thereon for supporting a cutting element 21. The cutting element 21 includes a cutting surface 18 for cooperating with the extrusion die 13 to cut and crimp extrudate to a desired length as the extrudate exits the extrusion die 13. The cutting element 21 is mounted to a face plate 35 mounted on the extension 34 by a plurality of screws 36. The cutting surface 18 of the cutting element 21 is formed at an angle between 25 to 90° to a surface of said cutting element 21.

Referring to Figure 2, the elongated cutter wall 16 includes two cut-out portions 38 formed on an outside surface thereof adjacent the opened driveable end 15. The cut-out portions 38 are for receiving the operable end of a drive device (not shown) in order to reciprocate the cutting member 14 and therefore the cutting element 21 up and down in cooperation with the extrusion die 13. The drive device can be any well known device for reciprocating the cutting member 14. The elongated cutter wall 16 also includes a cut-out 39 for allowing passage of the upper portion 28 of the filling tube 20

It is noted that the extrusion wall 10 and the cutter member 14 are illustrated having a tubular shape; however, it can be readily understood that they can be made in other cooperating shapes as well. All that is necessary is for the cutting member14 to have an inside diameter of generally the same size and shape as the outside diameter and shape of the extrusion wall 10 to allow the cutting member 14 to reciprocate in a sliding manner on the outside of the extrusion wall 10.

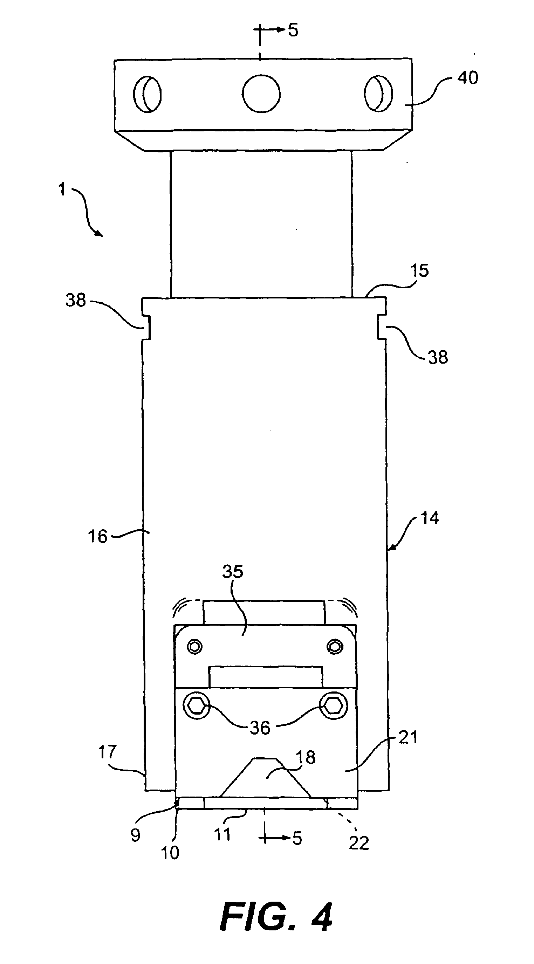

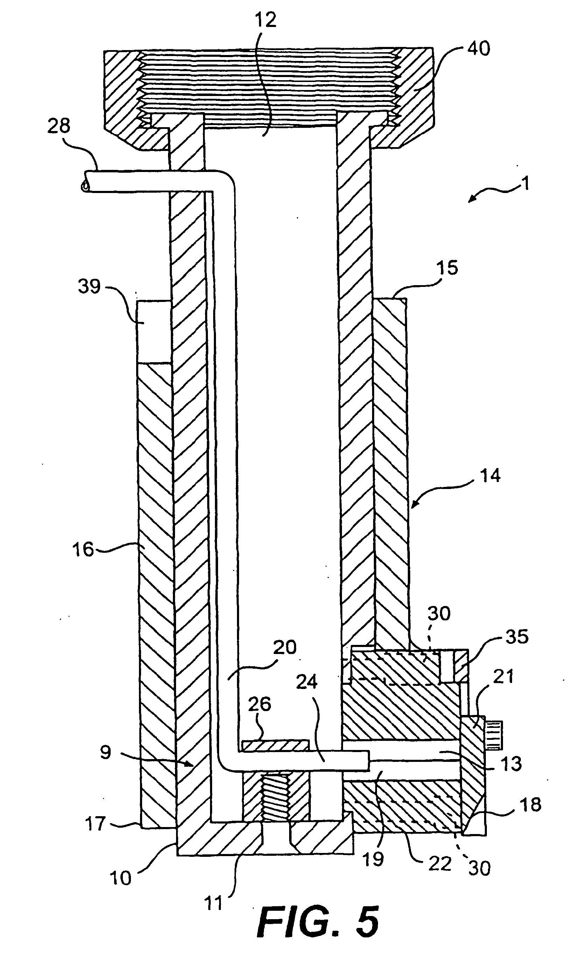

The operation of the die and cutter assembly of the present invention will now be described with reference to Figures 2-5. Figures 2 and 3 illustrate the "ready to cut" state, while Figures 4 and 5 illustrate the "after cut" state. Referring to Figures 2 and 3, the mash is forced through the opened fixed end 12 of the extrusion member 9 from the pressure vessel for containing a mash of food while the cutter member 14 is in the upper position. The filling is also forced through the filling tube 20 from the pressure vessel for containing filling. As noted above, if a plurality of die and cutter assemblies are used, the mash and filling are also fed through first and second manifolds, respectively, for distributing the mash and filling to the die and cutter assemblies.

Referring specifically to Figure 3, the mash and filling merge together in the extrusion passageway 19 and are forced through the extrusion die 13. Once a predetermined length of extrudate is fed through the extrusion die 13, the cutter member 14 is moved from the position illustrated in Figures 2 and 3 to the position illustrated in Figures 4 and 5 to cut the extrudate to the predetermined length. The movement of the cutter member drives the cutting surface 18 of the cutting element into cooperation with the extrusion die 13 in order to cut the extrudate and crimp the extrudate to ensure that the filling remains within the extruded food product after being cut.

The above operation occurs continuously with the extrudate exiting the extrusion die 13 and being cut by the reciprocating cutting member 14 in order produce food products of a predetermined length.

A wide variety of filling materials, for instance, jams, cheeses, barbecue sauces, gravies, gelatins, etc. can be placed into extruded foodstuffs in accordance with the present invention. The filling will generally be in the form of a viscous liquid or a paste, although it would also be possible to fill an extruded foodstuff with a flowable powder using the apparatus of the present invention. Food products that can be extruded and filled with the above filling materials include, *e.g*., meats, poultry, seafood, cereal grains, vegetables, fruits, dough, and solid dairy products. As specific examples, the mash may be prepared from beef, chicken, shrimp, wheat, corn, rice, potatoes, apples, and cheese.

The shape and size of the extrusion die 13 can be varied widely, in order to provide differently shaped and sized foodstuffs. Likewise, the shape, size, and, if desired, location of the extension 24 of the filling tube 20 can be varied widely, in order to provide for different amounts and/or locations of filling within the extruded foodstuff.

The cutter member 14 is disposed at least partially over and reciprocally slideable on the tubular extrusion wall and is operably connected at the driveable end to a drive device for reciprocatably sliding the cutter member over and away from the extrusion die 13. The rate of number of strokes per minute (down and up) at which the cutter member can operate can range from 80 strokes/minute through 500 strokes/minute.

The pressure in the pressure vessel will vary considerably from mash to mash and die to die, but pressures of 6.85KPa - 1,72MPa (1 to 250 psig) are normally used, especially with the usual mash temperatures of -39°C -23.9°C (25°F to 75°F) Water or other dispersing liquids, *e.g*., 3% to 70%, may be added to the ground food in order to produce a liquid mash. Binders, flavors, preservatives, colors, stabilizers, antioxidants, and the like may be added to the mash, in conventional amounts. Most often, a gelling material is added to the mash, *e.g*., a settable gum or pectate, for example, guar gum and sodium alginate, in conventional amounts of about 0.1% to 25%. The gum or pectate is set by a gelling agent, *e.g*., a 0.5% to 10% solution of calcium chloride and sodium alginate.

The length of individual products extruded in accordance with the present invention will depend upon both the rate at which the cutter member operates and the rate at which the product is extruded, the latter being a function of the viscosity of the product in the pressure vessel and the pressure being applied to that product.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A die and cutter assembly (1) for an extruder, comprising:
an elongated annular extrusion member (9) having an extrusion wall (10), a first, open end (12) and a second end (11), said first, open end being attachable in fluid communication with a first manifold of the extruder; and
a cutter member (14) having an opened driveable end (15), an elongated cutter wall (16), and an opened cutter end (17) with a cutting surface (18) for cutting extrudate to a desired length as the extrudate exits an extrusion die (13), and a filling tube (20) attachable to a second manifold of the extruder, said filling tube (20) including a filling tube extension (24) formed thereon at substantially at a right angle thereto,
**characterised in that**
the cross-section of the second end (11) of the extrusion member (9) is closed;
an extension (22) extending to one side on said elongated annular extrusion member (9) and substantially at a right angle thereto is formed;
said filling tube (20) enters said elongated annular extrusion member (9) adjacent the first, open end (12) of the elongated annular extrusion member (9) and extends inside the elongated annular extrusion member (9) to the second end (11) of the elongated annular extrusion member (9), and located within said extension (22) of said elongated annular extrusion member (9),
the extrusion die (13) is formed on said extension (22) of said elongated annular extrusion member (9); and
said cutter member (14) is reciprocally slideable on the extrusion wall (10) and axially disposed at least partially over said extrusion wall (10) and is operably connectable at the driveable end (15) to a drive device of the extruder for reciprocatably sliding the cutting surface of the cutter member (14) over and away from the extrusion die (13).

2. The die and cutter assembly according to claim 1, wherein said cutter member (14) includes a housing (34) extending from an outside surface of said elongated cutter wall (16), said cutting surface (18) being located on said housing (34) in cooperative relationship with said extrusion die (13).

3. The die and cutter assembly according to claim 2, wherein said cutting surface (18) is formed on a cutting element (21) mounted to said housing (34), said cutting surface (18) is formed at an angle to a surface of said extrusion die (13).

4. The die and cutter assembly according to claim 3, wherein said angle is between 25 and 90° with respect to said surface of said housing (34).

5. The die and cutter assembly according to any of claims 1 to 4, wherein said filling (20) tube includes an entry tube formed on an end of said filling tube opposite said tube extension (24), said entry tube extending transverse to an axis of said filling tube (20).

6. The die and cutter assembly according to any of claims 1 to 5, wherein said cutter member (14) is tubular and said elongated cutter wall (16) includes an inside diameter generally the same diameter as an outside diameter of said extrusion wall (10), said cutter member (14) being slidable on said extrusion wall (10) to reciprocate said cutting surface (18) in cooperation with said extrusion die (13).

7. The die and cutter assembly according to any of claims 1 to 6, wherein the extruder is for producing an extruded food piece containing a filling, said extruder including a first pressure vessel for containing a mash of the food under pressure, a second pressure vessel for containing the filling under pressure, pressure exerting means for maintaining pressure in the pressure vessels, and wherein the first and second manifolds are in fluid communication with the first and second pressure vessels, respectively.

## Patentansprüche

1. Baugruppe (1) aus Form und Schneideinrichtung für einen Extruder, die Folgendes umfasst:
ein längliches ringförmiges Extrusionselement (9) mit einer Extrusionswand (10), einem ersten, offenen Ende (12) und einem zweiten Ende (11), wobei das erste, offene Ende in Fluidkommunikation an einem ersten Verteiler des Extruders angebracht werden kann; und
ein Schneideelement (14) mit einem geöffneten, verfahrbaren Ende (15), einer länglichen Schneidewand (16) und einem geöffneten Schneideende (17) mit einer Schneidfläche (18) zum Abschneiden von Extrudat auf eine gewünschte Länge, wenn das Extrudat aus einer Extrusionsform (13) austritt, und
ein Füllrohr (20), das an einem zweiten Verteiler des Extruders befestigt werden kann, wobei das Füllrohr (20) eine Füllrohrverlängerung (24) einschließt, die daran in einem im Wesentlichen rechten Winkel dazu ausgebildet ist,
**dadurch gekennzeichnet, dass**
der Querschnitt des zweiten Endes (11) des Extrusionselements (9) geschlossen ist;
an dem länglichen ringförmigen Extrusionselement (9) eine Verlängerung (22) ausgebildet ist, die sich zu einer Seite im Wesentlichen in einem rechten Winkel zu demselben erstreckt;
das Füllrohr (20) in das längliche ringförmige Extrusionselement (9) angrenzend an das erste, offene Ende (12) des länglichen ringförmigen Extrusionselements (9) eintritt und sich innerhalb des länglichen ringförmigen Extrusionselements (9) zu dem zweiten Ende (11) des länglichen ringförmigen Extrusionselements (9) erstreckt und innerhalb der Verlängerung (22) des länglichen ringförmigen Extrusionselements (9) angeordnet ist;
die Extrusionsform (13) an der Verlängerung (22) des länglichen ringförmigen Extrusionselements (9) ausgebildet ist; und
das Schneideelement (14) an der Extrusionswand (10) hin und her verschiebbar und axial mindestens teilweise über der Extrusionswand (10) angeordnet ist und operativ an dem verfahrbaren Ende (15) mit einer Antriebseinrichtung des Extruders verbunden werden kann, um die Schneidoberfläche des Schneideelements (14) über die Extrusionsform (13) und von dieser weg hin und her zu verschieben.

2. Baugruppe aus Form und Schneideeinrichtung nach Anspruch 1, wobei das Schneideelement (14) ein Gehäuse (34) enthält, das sich von einer Außenfläche der länglichen Schneidewand (16) erstreckt, wobei die Schneidoberfläche (18) an dem Gehäuse (34) in zusammenwirkendem Verhältnis mit der Extrusionsform (13) angeordnet ist.

3. Baugruppe aus Form und Schneideeinrichtung nach Anspruch 2, bei der die Schneidoberfläche (18) an einem Schneidelement (21) ausgebildet ist, das an dem Gehäuse (34) angebracht ist, wobei die Schneidoberfläche (18) in einem Winkel zu einer Oberfläche der Extrusionsform (13) ausgebildet ist.

4. Baugruppe aus Form und Schneideeinrichtung nach Anspruch 3, bei der der Winkel zwischen 25 und 90° in Bezug zu der Oberfläche des Gehäuses (34) beträgt.

5. Baugruppe aus Form und Schneideeinrichtung nach einem der Ansprüche 1 bis 4, bei der das Füllrohr (20) ein Eintrittsrohr enthält, das an einem Ende des Füllrohrs entgegengesetzt der Rohrverlängerung (24) ausgebildet ist, wobei das Eintrittsrohr sich quer zu einer Achse des Füllrohrs (20) erstreckt.

6. Baugruppe aus Form und Schneideeinrichtung nach einem der Ansprüche 1 bis 5, bei der das Schneideelement (14) röhrenförmig ist und die längliche Schneidewand (16) einen Innendurchmesser mit allgemein dem gleichen Durchmesser wie ein Außendurchmesser der Extrusionswand (10) aufweist, wobei das Schneideelement (14) an der Extrusionswand (10) verschiebbar ist, um die Schneidoberfläche (18) in Zusammenwirkung mit der Extrusionsform (13) hin und her zu bewegen.

7. Baugruppe aus Form und Schneideeinrichtung nach einem der Ansprüche 1 bis 6, bei der der Extruder zum Herstellen eines eine Füllung enthaltenden extrudierten Nahrungsmittelstücks vorgesehen ist, wobei der Extruder ein erstes Druckgefäß zum Enthalten eines Breis des Nahrungsmittels unter Druck, ein zweites Druckgefäß zum Enthalten der Füllung unter Druck, sowie Druck ausübende Mittel zum Aufrechterhalten des Drucks in den Druckgefäßen umfasst, und wobei der erste und zweite Verteiler in Fluidkommunikation mit dem ersten bzw. zweiten Druckgefäß stehen.

## Revendications

1. Ensemble matrice et outil de coupe (1) pour une extrudeuse, comportant :
un organe d'extrusion annulaire allongé (9) ayant une paroi d'extrusion (10), une première extrémité ouverte (12) et une deuxième extrémité (11), ladite première extrémité ouverte pouvant être attachée en communication fluide avec un premier collecteur de l'extrudeuse ; et
un organe de type outil de coupe (14) ayant une extrémité ouverte pouvant être entraînée (15), une paroi d'outil de coupe allongée (16), et une extrémité d'outil de coupe ouverte (17) avec une surface de coupe (18) permettant de couper le produit extrudé selon une longueur souhaitée au fur et à mesure que le produit extrudé sort d'une matrice à extrusion (13), et
un tuyau de remplissage (20) pouvant être attaché sur un deuxième collecteur de l'extrudeuse, ledit tuyau de remplissage (20) comprenant une rallonge de tuyau de remplissage (24) formée sur celui-ci dans une large mesure selon un angle droit par rapport à celui-ci,
**caractérisé en ce que**
la section transversale de la deuxième extrémité (11) de l'organe d'extrusion (9) est fermée ;
sur ledit organe d'extrusion annulaire allongé (9), est formée une rallonge (22) s'étendant d'un côté dans une large mesure selon un angle droit par rapport à celui-ci ;
ledit tuyau de remplissage (20) entre dans ledit organe d'extrusion annulaire allongé (9) de manière adjacente par rapport à la première extrémité ouverte (12) de l'organe d'extrusion annulaire allongé (9) et s'étend à l'intérieur de l'organe d'extrusion annulaire allongé (9) jusqu'à la deuxième extrémité (11) de l'organe d'extrusion annulaire allongé (9), et se trouvant à l'intérieur de ladite rallonge (22) dudit organe d'extrusion annulaire allongé (9) ;
la matrice à extrusion (13) est formée sur ladite rallonge (22) dudit organe d'extrusion annulaire allongé (9) ; et
ledit organe de type outil de coupe (14) peut être coulissé de manière réciproque sur la paroi d'extrusion (10) et disposé de manière axiale au moins partiellement sur ladite paroi d'extrusion (10) et est fonctionnellement connectable au niveau de l'extrémité pouvant être entraînée (15) sur un dispositif d'entraînement de l'extrudeuse pour faire coulisser selon un mouvement de va-et-vient la surface de coupe de l'organe de type outil de coupe (14) sur la matrice d'extrusion (13) et à distance de celle-ci.

2. Ensemble matrice et outil de coupe selon la revendication 1, dans lequel ledit organe de type outil de coupe (14) comprend un logement (34) s'étendant en provenance d'une surface extérieure de ladite paroi allongée (16) de l'outil de coupe, ladite surface de coupe (18) étant située sur ledit logement (34) en relation de coopération avec ladite matrice à extrusion (13).

3. Ensemble matrice et outil de coupe selon la revendication 2, dans lequel ladite surface de coupe (18) est formée sur un élément de coupe (21) monté sur ledit logement (34), ladite surface de coupe (18) est formée selon un angle par rapport à une surface de ladite matrice à extrusion (13).

4. Ensemble matrice et outil de coupe selon la revendication 3, dans lequel ledit angle est entre 25 et 90° par rapport à ladite surface dudit logement (34).

5. Ensemble matrice et outil de coupe selon l'une quelconque des revendications 1 à 4, dans lequel ledit tuyau de remplissage (20) comprend un tuyau d'entrée formé sur une extrémité dudit tuyau de remplissage de manière opposée à ladite rallonge de tuyau (24), ledit tuyau d'entrée s'étendant de manière transversale par rapport à un axe dudit tuyau de remplissage (20).

6. Ensemble matrice et outil de coupe selon l'une quelconque des revendications 1 à 5, dans lequel ledit organe de type outil de coupe (14) est tubulaire et ladite paroi allongée (16) de l'outil de coupe comprend un diamètre intérieur généralement le même diamètre qu'un diamètre extérieur de ladite paroi d'extrusion (10), ledit organe de type outil de coupe (14) pouvant être coulissé sur ladite paroi d'extrusion (10) pour animer d'un mouvement de va-et-vient ladite surface de coupe (18) en coopération avec ladite matrice à extrusion (13).

7. Ensemble matrice et outil de coupe selon l'une quelconque des revendications 1 à 6, dans lequel l'extrudeuse a pour objet de produire un morceau d'aliment extrudé contenant une garniture, ladite extrudeuse comprenant un premier récipient sous pression destiné à contenir une purée de l'aliment sous pression, un deuxième récipient sous pression destiné à contenir la garniture sous pression, un moyen exerçant une pression destiné à maintenir la pression dans les récipients sous pression, et dans lequel le premier collecteur et le deuxième collecteur sont en communication fluide avec le premier récipient sous pression et le deuxième récipient sous pression, respectivement.
